# EUROPEAN PATENT APPLICATION

(11) **EP 4 414 148 A2**
(43) Date of publication of application: **14.08.2024**
(21) Application number: 24156218.0
(22) Date of filing: 07.02.2024
(51) Int. Cl.: B27K 3/20, B27K 3/22, B27K 3/26, B27K 3/32, B27K 5/02, B44C 5/04

(54) **IN SITU PIGMENTATION OF DECORATIVE MATERIALS**

(30) Priority: 10.02.2023 US 202318108057
(71) Applicant: Faurecia Interior Systems, Inc., Auburn Hills, MI 48326 (US); Tabu S.p.A., 22063 Cantu (IT)
(72) Inventor: PICCIN, Hugo, CUPERTINO, 95014 (US); TAGLIABUE, Andrea, 22063 CANTU (IT); CREDARO, Andrea, 22063 CANTU (IT); ROMITO, Paolo, 21047 SARONNO (IT)
(74) Representative: Lavoix

(57) **Abstract**

A method includes synthesizing pigment *in situ* in a porous material and includes impregnating the porous material with a first reactant, and subsequently impregnating the porous material with a second reactant to form the pigment in situ. The method is contrasted with applying a pigment to a material via an external surface of the material, where pigment penetration is limited, and the pigment is not protected from environmental hazards such as ultraviolet light. Forming the pigment within the cells of the porous material provides pigmentation throughout the material and protects the pigment over the life of the product.

## Description

### TECHNICAL FIELD

The present disclosure is related generally to pigmentation of decorative materials and, more particularly, to pigmentation of porous vehicle interior materials.

### BACKGROUND

Vehicle interiors have evolved from their original utilitarian function-mainly including places to sit and controls for driving the vehicle-to a blank palette on which vehicle designers seek to provide aesthetically pleasing style elements to differentiate their vehicles from others. Natural wood surfaces, for example, used to be reserved for the most luxurious and expensive vehicles but have made their way into all levels of mass-produced vehicle interiors to provide a sense of luxury to lower and mid-priced vehicles. Challenges with such natural materials include providing protection from heat and ultraviolet light over the life of the vehicle in a way that does not obscure the natural beauty of the material.

U.S. Patent Application Publication No. 2010/0206467 by Durand and Piccin discloses a method including coating a layer of ligneous material with a transparent composition containing a synthetic resin having a resilience which is greater than that of the ligneous material in all directions. The transparent composition may be a polyurethane selected, and the ligneous material is visible therethrough. The transparent layer is roller-engraved to further provide a wood grain texture on the outermost surface.

### SUMMARY

In accordance with one or more embodiments, a method of processing a porous material includes impregnating the porous material with a first reactant and subsequently impregnating the porous material with a second reactant. The first reactant and the second reactant react within the porous material to form a pigment within the porous material.

In various embodiments, the method includes immersing the porous material in a first aqueous solution in which the first reactant is a solute, and subsequently immersing the porous material in a second aqueous solution in which the second reactant is a solute. The pigment may be non-soluble in the second aqueous solution such that solid pigment particles are formed in the porous material during the second immersing step.

In various embodiments, one of the reactants comprises a salt of a coordination complex comprising a transition metal, and the other of the reactants is a transition metal salt such that the pigment is a compound comprising the transition metal of the coordination complex and the transition metal of the transition metal salt.

In various embodiments, the method includes bleaching the porous material before impregnating the porous material with the first reactant.

In various embodiments, the porous material may have a first color before bleaching and a different second color after bleaching. The pigment may change the porous material from the second color to a third color substantially the same as the first color.

In various embodiments, the method includes drying the porous material after impregnating the porous material with the first reactant and before impregnating the porous material with the second reactant.

In various embodiments, the porous material is a sheet of material having a thickness and the pigment is formed throughout the thickness.

In various embodiments, the method includes splitting a sheet of the porous material along a plane between opposite faces of the sheet of material after the pigment is formed to form first and second split sheets of material. Opposite faces of each of the first and second split sheets of material are pigmented with the pigment.

In various embodiments, at least some of the pigment is formed in cells of the porous material.

In various embodiments, the porous material comprises natural fibers. The natural fibers may include lignocellulosic fibers, and at least some of the pigment may be formed in cells defined by cell walls comprising the lignocellulosic fibers.

In various embodiments, the method includes forming the porous material into a decorative layer of a vehicle interior panel after the pigment is formed within the porous material.

In accordance with various embodiments, a vehicle interior panel includes a pigmented decorative layer comprising a porous material and a synthetic pigment, wherein at least some of the pigment is disposed within pores of the porous material.

It is contemplated that any number of the individual features of the above-described embodiments and of any other embodiments reflected in the claims, drawings, or description below can be combined in any combination to define an invention, except where features are incompatible.

### BRIEF DESCRIPTION OF THE DRAWINGS

Illustrative embodiments will hereinafter be described in conjunction with the following figures, wherein like numerals denote like elements, and wherein:
FIG. 1 schematically illustrates a portion of a method of making a vehicle interior panel;
FIG. 2 schematically illustrates an illustrative method of processing a decorative material; and
FIG. 3 is a schematic view of the cellular structure of a natural porous material.

### DESCRIPTION OF ILLUSTRATIVE EMBODIMENTS

Described below is a vehicle interior panel with a synthetically pigmented decorative layer and a method of processing a material in which a pigment is formed *in situ.* The pigment can be formed within cells of the material where it is better protected from heat and ultraviolet light when compared to natural dyes and traditional pigments that are pre-made and applied to a material via an exterior surface.

As used herein, a "colorant" is a pigment or a dye or any mixture thereof which, when added to a material, changes the color of the material. A change in color is defined as a shift in the median wavelength of light reflected by the colored material. A "pigment" is composed of solid particles that become embedded in the material being colored and is distinguished from a "dye," which chemically bonds to the material being colored. Pigments may be inorganic and/or insoluble in water, while dyes are typically organic and water soluble. As used herein, a "solution" is in reference to a liquid solvent in which an otherwise solid solute is dissolved. A substance is considered "soluble" in a solvent if it dissolves in the solvent to form a homogeneous, single-phase solution with the solvent such that the solute is not mechanically separable from the solvent. A solute may be "ionic" or "non-ionic." An ionic solute dissociates into positive cations and negative anions in solution, while a non-ionic solute does not dissociate into charged ions. An "aqueous" solution is a solution in which the solvent consists essentially of water or in which the solvent is a liquid in which water is the majority constituent.

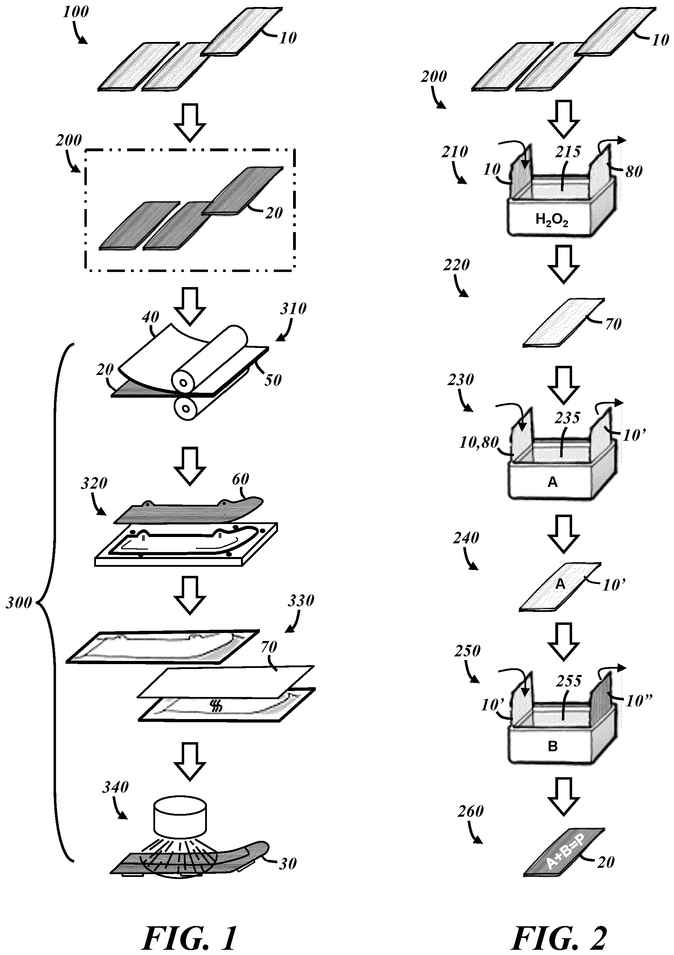

FIG. 1 schematically illustrates a portion of an illustrative method of making a vehicle interior panel, including a step 100 of providing a decorative material 10, a step 200 of processing the material into processed decorative material 20, and a step 300 of forming a decorative covering 30 that includes the processed decorative material 20. The method may further include an unillustrated step of attaching or otherwise disposing the decorative covering 30 over one or more other layers to form the vehicle interior panel, including a substrate layer (e.g., a polymer or polymer composite) that provides the underlying structure for the interior panel.

The decorative material 10 is the material that is visible at the finished surface of the decorative covering 30 and which faces the interior of a vehicle passenger cabin in which the covering or interior panel is installed. The decorative material 10 can thus be nearly any material including natural or synthetic materials in fabric, film, and/or sheet form. Non-limiting examples of natural materials include wood, leather, cotton, mineral, etc. Polymer-based materials are examples of synthetic materials.

The decorative material 10 may be a porous material. A porous material is characterized by a void volume within the material which is distributed in the form of relatively small individual pores or cells and/or interstitial spaces between solid portions of the material (e.g., between fibers). As used herein, a porous material is fluid-permeable such that water or other liquid can enter the pores or other voids within the material from outside the material.

In some embodiments, the porous material is a natural material. The natural material may include natural fibers, such as plant fibers or animal fibers. An example of a natural material including plant fibers is a lignocellulosic material, which includes natural cellulose fibers bound together by organic non-cellulosic materials, including lignin and hemicellulose. Tree wood (e.g., ash, oak, cedar, etc.) and bamboo are examples of lignocellulosic materials having a cellular structure, which is discussed further below after the discussion of the processes of FIGS. 1 and 2. In the illustrated example, the decorative material 10 is a wood veneer, which is a relatively thin (e.g., 5 mm or less) sheet of solid wood.

The step 200 of processing the decorative material 10 includes adding a colorant to the material to form the processed decorative material 20 and is discussed in further detail below. The illustrated step 300 of forming the decorative covering 30 includes a lamination step 310, a pre-forming step 320, a forming step 330, and a finishing step 340.

The lamination step 310 includes attaching a backing layer 40 to the processed decorative material 20 to form a laminar composite 50. The backing layer 40 may include multiple sublayers, such as a polymer film layer, a fabric layer, and/or one or more adhesive layers to bond overlying layers together. The processed decorative material 20 is full-surface bonded to the backing layer 40 via heat and pressure in the lamination step 310. The backing layer is a plastically deformable layer to facilitate forming the flat laminar composite 50 to a three-dimensional shape in the subsequent forming step 330. The backing layer 40 can for example be heated, formed to a three-dimensional shape, and then cooled to remain in the three-dimensional shape. The full-surface bonding of the processed decorative material 30 to the backing layer 40 facilitates holding the decorative layer in the three-dimensional shape in the presence of residual stresses from the forming step 330.

The preforming step 320 may include die-cutting or otherwise trimming and/or punching the laminar composite 50 to a laminar preform 60 prior to the forming step 330. A plurality of differently shaped flat preforms 60 of laminar composite material may be collected together as a wood kit for subsequent processing into the decorative covering 30, which may include multiple pieces of decorative material assembled together into a final shape.

The forming step 330 includes forming the cut preform 60 of laminar composite material from an initial flat configuration into a three-dimensional shape. In the illustrated example, the preform 60 (not visible in step 330 of FIG. 1) and a support layer 70 are disposed between upper and lower forming dies. The preform and/or the support layer 70 may be heated before or after being disposed between the forming dies, and the forming dies are brought together so that the support layer and preform take the shape of the die surfaces. A heat-activated adhesive layer may be provided between the preform 60 and support layer by the backing layer 40, or as part of the support layer 70. Heat from the preheated layers and/or from the dies activates the adhesive. The three-dimensionally shaped laminar assembly is then cooled and removed from between the dies to form the decorative covering 30.

The finishing step 340 includes one or more additional processing steps to further modify the three-dimensionally shaped laminar assembly, which includes the processed decorative material 20, to the finished decorative layer 30. In the illustrated example, the finishing step 340 includes coating the decorative surface of the decorative material with a transparent or translucent coating (e.g., polyurethane) to provide additional protection from scratching or marring and/or provide luster to the decorative covering 30. The finishing step 340 may further include additional trimming steps, addition of fasteners or other accessories, etc. in preparation for assembly into a vehicle interior panel or vehicle interior.

It should be noted that the method of FIG. 1 is merely illustrative. Forming a decorative covering 30 and/or a finished vehicle interior panel that includes the processed decorative material 20 may include additional unillustrated steps, one or more illustrated steps may be omitted, some of the steps may be performed in a different order or combined into one step, etc.

With reference to FIG. 2, and as noted above, the step 200 of processing the decorative material 10 includes adding a colorant to the material to form the processed decorative material 20. The illustrated step 200 of processing includes a bleaching step 210, a first drying step 220, a first impregnating step 230, a second drying step 240, a second impregnating step 250, and a third drying step 260. The bleaching step 210 and/or one or more of the drying steps may be omitted in some cases.

The bleaching step 210 includes applying a bleaching solution 215 to the decorative material 10 to transform it into a bleached decorative material 80. The bleaching solution 215 may be or may include a chlorine-based bleach (e.g., an aqueous sodium hypochlorite solution), a peroxide-based bleach (e.g., a solution of NaOH and H₂O₂), or an acid-based bleach (e.g., oxalic acid). The bleaching solution 215 may include other components (e.g., surfactants) to enhance its effects. In the illustrated example, the wood veneer decorative material 10 is immersed in the bleaching solution. Alternatively, the bleaching solution may be sprayed on or otherwise applied to the decorative material 10. The decorative material 10 is immersed in or otherwise exposed to the bleaching solution for an amount of time that is effective to bleach the decorative material to the desired degree, which may vary based on the type of decorative material and/or a preference for the desired aesthetic or functional effects. In one example, the bleaching step 210 is performed at a temperature in a range from 30 to 120 °C and/or at a pressure in a range from 1 to 5 bar and/or for a duration in a range from 30 to 120 minutes.

The bleaching step 210 may serve multiple purposes, including removal of stains or other unwanted coloration and/or at least partially breaking down certain organic components within the decorative material 10. Bleaching may for example at least partially break down lignin and/or hemicellulose in a lignocellulosic material. While it may not be desirable to remove the non-cellulosic materials, bleaching may help make the lignocellulosic material less hydrophobic to enhance the subsequent impregnation steps. In addition, many lignocellulosic and other natural materials include natural organic dyes or materials that act as dyes (e.g., sap), and the bleaching step 210 can breakdown and/or eliminate such dyes to provide better uniformity in the subsequent coloration of the material. Naturally occurring organic dyes may also break down or discolor over time once exposed outside of the plant from which the lignocellulosic material was taken such that bleaching can help provide long term color stability by removing natural dyes. The bleaching step 210 may be followed by a rinsing step before the first drying step 220. Residual moisture or solvent from the bleaching solution 215 or rinse medium is evaporated from the bleached decorative material 80 in the first drying step 220. In one example, the drying step 220 is performed at a temperature in a range from 100 to 180 °C and/or for a duration in a range from 3 to 8 minutes. The bleached decorative material 80 may continue to be referred to as the decorative material 10 below.

Impregnation steps 230 and 250 may be referred to together as a coloration step or a pigmentation step. The pigmentation step includes impregnating the decorative material 10 with a first reactant A and subsequently impregnating the decorative material with a second reactant B. The first reactant and the second reactant are selected to form a pigment P as a reaction product.

The first reactant A is provided in a first solution 235, which may be an aqueous solution. In the illustrated example, the decorative material is immersed in the first solution 235. During the first impregnation step 230, the first solution 235 infiltrates the decorative material 10. Where the material is a porous material, the first solution soaks into the porous material, entering the hollow pores, cells, and/or interstitial spaces within the material via fluid pressure and/or capillary action. After the decorative material 10 is saturated by the first solution 235 the desired amount, such as when the cells of the porous material are entirely filled with the first solution, the saturated decorative material 10' is removed from the first solution 235 to begin the second drying step 240. In one example, the first impregnation step 230 is performed at a temperature in a range from 30 to 80 °C and/or at a pressure in a range from 1 to 5 bar and/or for a duration in a range from 30 to 360 minutes.

During the drying step 240, residual solvent is evaporated from the saturated material 10' such that reactant A is precipitated within the decorative material. Where the decorative material is a porous material, reactant A may remain in cells of the porous material after the drying step 240. For example, where reactant A is a salt dissolved in an aqueous solvent in the first solution 235, a residue comprising the reactant salt or a hydrate of the salt resides in cells of the porous material after the drying step 240. In one example, the drying step 240 is performed at a temperature in a range from 80 to 160 °C and/or for a duration in a range from 3 to 8 minutes.

The second reactant B is provided in a second solution 255, which may also be an aqueous solution. In the illustrated example, the decorative material 10' containing the first reactant A is immersed in the second solution 255. During the second impregnation step 250, the second solution 255 infiltrates the decorative material 10'. Where the material is a porous material, the second solution 255 soaks into the porous material, entering the hollow pores, cells, and/or interstitial spaces within the material via fluid pressure and/or capillary action. In one example, the second impregnation step 250 is performed at a temperature in a range from 30 to 80 °C and/or at a pressure in a range from 1 to 5 bar and/or for a duration in a range from 30 to 360 minutes.

The solvent of the absorbed second solution 255 may redissolve reactant A and acts as a reaction medium for reactant A and reactant B, which react to form the pigment P. The pigment P may be non-soluble in the solvent of reactant B and precipitate out of solution upon formation. The *in situ* reaction may thereby deposit the pigment P within cells and other voids within the material. The pigment P may initially be in colloidal form in the reaction mixture. After the decorative material 10' is saturated by the second solution 255 and has encountered substantially all of the reactant A within the material, such as when the cells of the porous material are entirely filled with the second solution 255, the resaturated decorative material 10" is removed from the second solution to begin the third drying step 260.

During the drying step 260, residual solvent is evaporated from the saturated material 10' such that the precipitated pigment P remains within the decorative material. In one example, the drying step 260 is performed at a temperature in a range from 80 to 160 °C and/or for a duration in a range from 3 to 8 minutes. Where the decorative material is a porous material, pigment P may remain in cells of the porous material after the drying step 260. A small amount of reaction byproduct and/or reactant B may also remain within the material. However, where the reaction byproduct is soluble in the solvent of the second solution 255, the effect is minimized due to the precipitated pigment displacing the second solution from the voids in which it is formed. For example, where the byproduct of the reaction of reactant A and reactant B is a salt which is soluble in the solvent of the second solution 255, a small amount of residue comprising the byproduct salt or a hydrate of the byproduct salt may resides in or on the porous material after the drying step 260. The drying step 260 may be preceded by and/or followed by a rinsing step and dried again if necessary to remove any residual reactants or reaction byproducts.

In some cases, the formed pigment P does not obtain its final color until it oxidizes or undergoes some other activation reaction. Oxidation of the pigment P and the resulting color change may occur during the third drying step 260.

Reactants A and B and the resulting pigment are not particularly limited, as a large range of different colors of pigment may be synthesized in the disclosed method. One example of a family of colors comprising analogs of Prussian blue pigment is further described below for illustrative purposes.

As noted above, synthesis of the pigment P is according to the general equation:

A + B → P,

where the reaction byproduct is omitted. Each of reactants A and B may be ionic solutes that dissociate into positive and negative ions in solution:

A⁺A⁻ + B⁺B⁻ → AB + B⁺A⁻,

where B+A- is an ionic reaction byproduct which is soluble in the solvent of the second solution and P is the reaction product of A⁺ and B⁻. Valences are shown generically. Depending on the particular chemistry employed, the ions forming P and the byproduct may be reversed, or both reaction products may be precipitates.

Each of reactants A and B may include one or more metal atoms, and each reactant may be an inorganic salt each comprising one or more metal atoms:

M⁺A⁻ + B⁺(M'L)⁻ → MM'L + B⁺A⁻

M⁺A⁻ + B⁺(M'L)⁻ → P + B⁺A⁻,

where M is a first metal, M' is a second metal, and L is a ligand such that M'L is a metal complex. M and M' may be the same metal, different metals, or the same metal at different valence states. One or both of M and M' may be a transition metal. In this example, a metal salt provides the first metal M, which is in the form of cations in solution, and the second metal M' is provided by a salt of the metal complex M'L, which is in the form of anions in solution. Here again, valances are left generic.

In one particular embodiment, reactant A is a nitrate salt of the first metal M, and reactant B is a potassium salt of the metal complex:

MNO₃ + K(M'L) → MM'L + KNO₃,

where MM'L is the pigment, and potassium nitrate is the byproduct. Here again, valences are left generic. The charge and number of ions formed in solution by each reactant varies according to the valence of each ion-forming group. In the above example, for instance, the number of potassium atoms in reactant B may vary based on the valence of the metal complex, and excess potassium may form a potassium salt of the pigment, which itself may also be considered a pigment. While not shown here, the metal salt may be provided as a metal aquo complex.

In a more specific example, each of the first and second metals M, M' is iron:

Fe(NO₃)₂ + K₃[Fe(CN)₆] → KFe[Fe(CN)₆] + 2 KNO₃

where the first metal is iron (II) and the second metal is iron (III) provided by potassium ferricyanide. In the reaction, the ferricyanide is converted to ferrocyanide, and the resulting pigment:

KFe^{III}[Fe^{II}(CN)₆]

is a colloidal version of Prussian blue.

In some embodiments, one of the first or second reactants of respective solutions 235, 255 of FIG. 2 includes a source of transition metal ions, M⁺ (e.g., Fe²⁺ or Fe³⁺), and the other reactant includes a source of metal complex ions (M'L)⁻ (e.g., [Fe^{III}(CN)₆]³⁻ or [Fe^{II}(CN)₆ ]⁴⁻), and the resulting pigment is MM'L or a salt of MM'L (e.g., Fe^{III}₄[Fe^{II}(CN)₆]₃ or KFe^{III}[Fe^{II}(CN)₆]).

Analogs of the above-described formation of Prussian blue may be obtained by substituting different transition metals in for iron. In one embodiment, the first metal M is selected from iron (II), iron (III), copper (II), nickel (II), cobalt (II), or samarium (II), all of which are transition metals except for samarium, which is a lanthanide metal. Other lanthanide metals are possible. In one embodiment, the second metal M' is selected from iron (II), iron (III), or cobalt (II). Twelve different pigments with ten distinct colors can be produced when each of the six above-listed examples of the first metal M are combined with iron or cobalt as the second metal M'.

In some embodiments, the first solution 235 of FIG. 2 comprises reactant B and the second solution 255 comprises reactant A. The order in which the decorative material 10 is impregnated with the solution containing each of the two reactants may vary depending on the particular chemistry. In some embodiments, the method includes first impregnating the decorative material with a solution comprising metal complex ions, and subsequently impregnating the decorative material with a solution comprising a metal salt to form the pigment.

The synthetic pigment formed as a reaction product of the first and second reactants is not limited to the above examples or colors. A variety of differently colored pigments can be synthesized via different combinations of reactants. It is also possible to effectively blend different pigments *in situ.* For example, one of the solutions in which the decorative material is immersed may include more than one metal salt or more than one salt of a metal complex such that two pigments are simultaneously formed. The ability to blend colors offers limitless color choices.

The pigmentation process may simulate the natural color of wood in some cases, except with synthetic pigment providing the color rather than the original, natural organic dyes that may break down and discolor over time. In one embodiment, the porous material is wood having a first natural color before color processing. The wood material is first bleached as described above, which changes the material to a different second color, with the shift in color being toward white due to the removal of natural colorants from the wood. The reactants are formulated to replicate the natural color of the wood such that the pigment changes the wood material from the second, post-bleaching color to a third color that is substantially the same as the first color. In a particular example, ash wood veneer is first bleached and then pigmented with a pigment formed *in situ* within the cellular structure of the wood to replicate the original color, except with the longevity of a synthetic pigment rather than the decaying nature of naturally occurring dyes. The same color replication can be applied to other decorative materials of natural origin. As used here, "substantially the same" as applied to color means that the average person cannot discern any difference in color. Alternatively, it means that the average and/or median wavelength of light reflected from each surface are within 10% of each other.

The above-described colorant process may also be characterized by depth of penetration of the pigment. By saturating the decorative material such that cells or pores of the material are filled with reactants and their resulting pigments, the pigment may be presents throughout the entire thickness of the material. Where the decorative material is a wood veneer or other porous sheet of material having a thickness, the pigment is present at each of the two opposite facing surfaces of the material and throughout its thickness. The method may also be useful in pigmenting bulk materials such as wood boards from which wood veneers are made. Material thickness is unlimited so long as the material is capable of being saturated by the reactant solutions.

In some embodiments, a wood veneer or other sheet of decorative material is first pigmented as described above and then split along a plane between its opposite surfaces to form first and second split sheets of material. Because the pigment is present along the splitting plane, both of the first and second split sheets have opposite faces that are pigmented with the synthesized pigment.

This may be contrasted with traditionally applied pigments such as wood stains, in which pigments are provided as a suspension of pigment particles in a liquid carrier. Such stains are applied to an exterior surface of the material being stained, and the pigment particles reside largely at the application surface. These pigments typically do not penetrate the cellular structure of the material and instead only soak into fibers forming the walls of the cellular structure.

In embodiments of the above-described process, at least some of the pigment is formed in the pores or cells of the porous material and resides in those cells indefinitely after being formed there. This is not to the exclusion of other locations for the synthesized pigment-the pigment is also formed between cell walls and within the fibers forming the walls of the cellular structure.

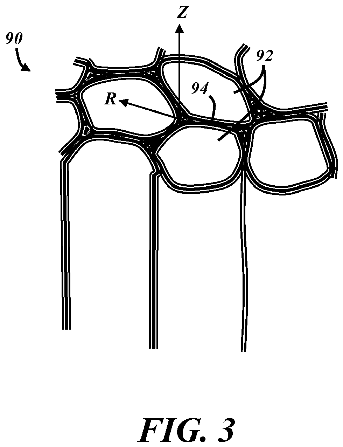

FIG. 3 is a schematic cross-sectional and cutaway view of a portion of the cellular structure 90 of a natural porous material such as wood or bamboo. The cellular structure 90 is made up of a plurality of distinct cells 92, each of which has perimeter defined by a cell wall 94. Each cell 92 is tubular and each cell extends axially in the longitudinal direction Z in the illustrated example. The longitudinal direction Z is the direction in which the tree trunk or plant stalk grows from the ground and is also the direction of the grain of the wood. Tree wood also includes hollow ray cells (not pictured) extending in a radial direction R with respect to the trunk or branch. The cell walls 94 are made of lignocellulosic fibers which are primarily cellulose along the inner surface with higher lignin content between the cell walls 94. Pore diameter, where the pore is the hollow portion of the cell, may generally range from about 20 µm to 400 µm. A cross-section of a tree trunk is composed mainly of smaller pores, on the order of 50 µm or less, with a smaller number of vessel-type pores on the order of 100 µm or more. Wood cells are not of infinite length-that is, each cell has a finite length from about 0.2 mm to 1.3 mm-but are generally arranged end-to-end in the axial direction. Some cell walls 94 have pits through which adjacent cells are in communication.

In some embodiments, the decorative material is a porous material in which the pores have diameters in a range from 20 µm to 400 µm, regardless of whether the material is lignocellulosic.

The above-described process may have other characteristics distinguishing it from traditional colorant processes such as external pigmentation and dyeing processes. In some embodiments of the method of FIG. 1, the process excludes a staining process in which a pigmented stain is applied to the decorative material after it is formed into a three-dimensional shape in step 330. In some embodiments, the pigmentation process excludes a dyeing process in which the material is dyed with organic colorants. In some embodiments, the colorant process excludes treatment of the colored material with an antioxidant or other material intended to chemically stabilize organic components of the colorant such as are commonly found in dyes. In some embodiments, the reaction products of reactants A and B excludes metal oxides or excludes antibacterial agents. None of these characteristics are excluded *per se.* It is of course possible to combine the above-described pigmentation process with dyes, antioxidant or antibacterial substances, oxide-based colorants, and/or additional pigmentation via external surfaces of the material.

It is to be understood that the foregoing is a description of one or more embodiments of the invention. The invention is not limited to the particular embodiment(s) disclosed herein, but rather is defined solely by the claims below. Furthermore, the statements contained in the foregoing description relate to particular embodiments and are not to be construed as limitations on the scope of the invention or on the definition of terms used in the claims, except where a term or phrase is expressly defined above. Various other embodiments and various changes and modifications to the disclosed embodiment(s) will become apparent to those skilled in the art. All such other embodiments, changes, and modifications are intended to come within the scope of the appended claims.

As used in this specification and claims, the terms "e.g.," "for example," "for instance," "such as," and "like," and the verbs "comprising," "having," "including," and their other verb forms, when used in conjunction with a listing of one or more components or other items, are each to be construed as open-ended, meaning that the listing is not to be considered as excluding other, additional components or items. Other terms are to be construed using their broadest reasonable meaning unless they are used in a context that requires a different interpretation.

## Claims

1. A method of processing a porous material comprising the steps of:
(a) impregnating the porous material with a first reactant; and
(b) impregnating the porous material with a second reactant after step (a),
wherein the first reactant and the second reactant react within the porous material to form a pigment within the porous material.

2. The method of claim 1, wherein step (a) includes immersing the porous material in a first aqueous solution in which the first reactant is a solute, and step (b) includes immersing the porous material in a second aqueous solution in which the second reactant is a solute.

3. The method of claim 2, wherein the pigment is non-soluble in the second aqueous solution such that solid pigment particles are formed in the porous material during step (b).

4. The method of claim 1, wherein one of the reactants comprises a salt of a coordination complex comprising a transition metal, and the other of the reactants is a transition metal salt such that the pigment is a compound comprising the transition metal of the coordination complex and the transition metal of the transition metal salt.

5. The method of claim 1, further comprising the step of bleaching the porous material before step (a).

6. The method of claim 5, wherein the porous material has a first color before the step of bleaching and a different second color after the step of bleaching, and wherein the pigment changes the porous material from the second color to a third color substantially the same as the first color.

7. The method of claim 1, further comprising the step of drying the porous material after step (a) and before step (b).

8. The method of claim 1, wherein the porous material is a sheet of material having a thickness and the pigment is formed throughout the thickness.

9. The method of claim 8, further comprising the step of splitting the sheet of material along a plane between opposite faces of the sheet of material after the pigment is formed to form first and second split sheets of material, wherein opposite faces of each of the first and second split sheets of material are pigmented with the pigment.

10. The method of claim 1, wherein at least some of the pigment is formed in cells of the porous material.

11. The method of claim 1, wherein the porous material comprises natural fibers.

12. The method of claim 10, wherein the natural fibers comprise lignocellulosic fibers.

13. The method of claim 11, wherein at least some of the pigment is formed in cells defined by cell walls comprising the lignocellulosic fibers.

14. The method of claim 1, further comprising, after step (b), forming the porous material into a decorative layer of a vehicle interior panel.

15. A vehicle interior panel comprising a pigmented decorative layer, wherein the pigmented decorative layer comprises a porous material and a synthetic pigment, wherein at least some of the pigment is disposed within pores of the porous material.
